# EUROPÄISCHE PATENTSCHRIFT

(11) **EP 2 150 713 B1**
(45) Veröffentlichungstag und Bekanntmachung des Hinweises auf die Patenterteilung: **28.12.2011**
(21) Anmeldenummer: 08735280.3
(22) Anmeldetag: 16.04.2008
(51) Int. Cl.: F16C 23/04, F16C 27/02

(54) **AUSGLEICH UMLAUFENDER WELLENSCHRÄGSTELLUNG**
COMPENSATION FOR CIRCUMFERENTIAL SHAFT INCLINATION
COMPENSATION D'UNE POSITION D'ARBRE OBLIQUE PÉRIPHÉRIQUE

(30) Priorität: 20.04.2007 DE 102007018794
(43) Veröffentlichungstag der Anmeldung: 10.02.2010
(73) Patentinhaber: ABI Anlagentechnik-Baumaschinen-Industriebedarf Maschinenfabrik und Vertriebsgesellschaft mbH, 63843 Niedernberg (DE)
(72) Erfinder: KLEIBL, Albrecht, 02747 Grosshennersdorf (DE); HEICHEL, Christian, 63843 Niedernberg (DE)
(74) Vertreter: Dörner, Kötter & Kollegen
(86) Internationale Anmeldenummer: PCT/EP2008/003038
(87) Internationale Veröffentlichungsnummer: WO 2008/128693

(56) Entgegenhaltungen:
- EP-A- 0 490 235
- GB-A- 2 190 434
- US-A- 5 813 768

## Beschreibung

### Gebiet der Erfindung

Die vorliegende Erfindung betrifft im Allgemeinen die Lagerung von drehbaren Wellen und insbesondere Lageranordnungen, um bei sich drehenden Wellen auftretende umlaufende Wellenverformung oder Wellendurchbiegung auszugleichen.

### Hintergrund der Erfindung

Bei drehbaren und insbesondere drehantreibbaren Wellen können im Betrieb (d.h. bei Drehung der Welle) Verformungen und insbesondere Wellendurchbiegung auftreten, wenn Kräfte nicht parallel (z.B. senkrecht oder unter einem Winkel) zur Wellenlängsachse wirken.

Man kann dabei folgende Fälle unterscheiden, nämlich solche, bei denen die Richtung von nicht parallel zur Wellenlängsachse wirkenden Kräften im Wesentlichen gleich bleibt, und solche, bei denen sich die Richtung von nicht parallel zur Wellenlängsachse wirkenden Kräften ändert und insbesondere umlaufende Radialkräfte auftreten.

Im ersten Fall ergibt sich eine im Wesentlichen ortsfeste Wellenverformung bzw. Wellendurchbiegung. Dies kann man als Umlaufverformung oder Umlauf(durch)biegung bezeichnen.

Im zweiten Fall ergibt sich eine Wellenverformung bzw. Wellendurchbiegung, deren Ausprägung bzw. Richtung sich in Abhängigkeit der Richtungsänderung der zugrunde liegenden Kräfte ändert. Dies ist insbesondere bei umlaufenden Radialkräften der Fall. Dies kann man dann - in Anlehnung an die Bezeichnung "umlaufende Radialkräfte" als umlaufende Wellenverformung oder Wellendurchbiegung bezeichnen. Beispiele für den ersten Fall sind Papiermaschinen und Seilwinden, wo sich die Richtung von nicht parallel zur Wellenlängsachse wirkenden Kräfte nicht ändert (z.B. Kräfte aufgrund von zusammenwirkenden an Wellen angeordneten Papierwalzen; Kräfte, die auf ein an einer Seilwinde angeordnetes Seil wirken).

Beispiele für den zweiten Fall sind Schwingungserreger und Vibratoren, wo an Wellen Unwuchtmassen vorhanden sind, die mit der Welle gedreht werden und dabei bezüglich der Wellenlängsachse bzw. Drehachse umlaufende radial wirkende Kräfte erzeugen.

Um im ersten Fall eine Umlaufverformung oder Umlauf(durch)-biegung auszugleichen, ist es beispielsweise bekannt, den radial außen liegenden Teil eines Wellenlagers (z.B. Wälzlageraußenring) mit einem Gelenklager zu versehen, das eine gelenkige Verbindung z.B. mit einem Gehäuse bereitstellt. Derartige Ansätze sind jedoch nicht oder nur eingeschränkt geeignet, um im zweiten Fall (umlaufende Wellenverformung oder Wellendurchbiegung) für einen Ausgleich zu sorgen.

GB 2 190 434 A offenbaret eine Lageranordnung mit den Merkmalen des Oberbegriffs von Anspruch 1.

Aus US 5,813,768 ist eine Lageranordnung bekannt, bei der das innere Lager als elastischer Hohlzylinder ausgebildet ist.

EP 0 490 235 offenbart ein als Kalottenlager ausgebildetes Gleitlager.

### Aufgabe der Erfindung

Aufgabe der vorliegenden Erfindung ist es, Lösungen bereitzustellen, die bei drehbaren Wellen auftretende umlaufende Wellenverformungen oder Wellendurchbiegungen ausgleichen.

### Kurze Beschreibung der Erfindung

Zur Lösung der obigen Aufgabe stellt die vorliegende Erfindung eine Lageranordnung, eine die Lageranordnung und eine Welle umfassende Anordnung und einen Schwingungserreger gemäß den unabhängigen Ansprüchen bereit.

Die erfindungsgemäße Lageranordnung ist für eine drehbare Welle vorgesehen und umfasst einen inneren Lagerteil zur Kopplung mit einem Ende der Welle, einen äußeren Lagerteil zur Kopplung mit einer Befestigungsstruktur und eine Rotationsachse. Wenigstens einer des inneren Lagerteils und des äußeren Lagerteils weist wenigstens bereichsweise eine elastische Verformbarkeit wenigstens teilweise senkrecht zur Rotationsachse auf. Erfindungsgemäß ist die Gleitfläche der Lageranordnung zwischen dem inneren Lagerteil und dem äußeren Lagerteil angeordnet.

Die Bezeichnungen "innen" und "außen" für die Lagerteile sind gewählt, um anzugeben, dass ein innerer Lagerteil in radialer Richtung bezüglich der Rotationsachse von dieser radial geringer beabstandet ist als der entsprechende äußere Lagerteil.

Der Begriff "Kopplung" und damit vergleichbare Formulierungen, wie "gekoppelt", umfassen, dass zwei Bauteile unmittelbar, direkt miteinander verbunden sind, beispielsweise mittels einer oder mehreren Schraub-, Klemm-, Kleb-, Schweißverbindungen und/oder form- und/oder kraftschlüssigen Verbindungen. Der Begriff "Kopplung" und damit vergleichbare Formulierungen, wie "gekoppelt", umfassen aber auch, dass zwei Bauteile mittelbar miteinander verbunden sind, beispielsweise mit einem dazwischen angeordneten Verbindungselement und/oder - struktur.

Dem gegenüber soll mit dem Begriff "Verbindung" und mit damit vergleichbaren Formulierungen, wie "verbunden" angegeben werden, dass zwei Bauteile, z.B. wie oben beispielhaft ausgeführt, unmittelbar, direkt miteinander verbunden sind.

Im Fall des inneren Lagerteils kann eine Kopplung mit dem Ende der Welle beispielsweise erfolgen, indem der innere Lagerteil und das Wellenende form- und/oder kraftschlüssig miteinander verbunden sind oder indem zwischen dem inneren Lagerteil und dem Wellenende eine Verbindungsstruktur verwendet wird (z.B. eine mit dem Wellenende verbundene Lageraufnahme für den inneren Lagerteil; eine mit dem inneren Lagerteil verbundene Wellenaufnahme für das Wellenende).

Auch wenn im Folgenden und insbesondere bei der Beschreibung bevorzugter Ausführungsform auf eine Verwendung der erfindungsgemäßen Lageranordnung bei Schwingungserregern und Vibratoren Bezug genommen wird, ist zu beachten, dass die erfindungsgemäße Lageranordnung überall dort verwendet werden kann, wo umlaufende Wellenverformungen und/oder Wellendurchbiegungen auszugleichen sind.

Vorzugsweise umfasst der innere Lagerteil eine Lagerhülse für das Gleitlager.

Ferner ist es bevorzugt, dass der äußere Lagerteil eine Lagerbuchse für das Gleitlager umfasst.

Der innere Lagerteil kann einen Bereich aufweisen, der zur verdrehsicheren Wirkverbindung und insbesondere zur formschlüssigen Aufnahme des Endes der Welle ausgelegt ist.

Bei bevorzugten Ausführungsformen ist wenigstens einer des inneren Lagerteils und des äußeren Lagerteils wenigstens teilweise elastisch komprimierbar.

Bei weiteren bevorzugten Ausführungsformen umfasst der innere Lagerteil einen ersten Bereich, der einen ersten Innendurchmesser aufweist und wenigstens teilweise elastisch verformbar ist, und einen zweiten Bereich mit einem zweiten Innendurchmesser, wobei der erste Innendurchmesser größer als der zweite Innendurchmesser ist. Bei solchen Ausführungsformen kann es vorgesehen sein, dass der zweite Bereich zur verdrehsicheren Kopplung mit dem Ende der Welle ausgelegt ist, während der erste Bereich, wenn bei Verwendung die Welle und der zweite Bereich miteinander gekoppelt sind, die Welle und insbesondere deren Ende nicht kontaktiert, sondern freigestellt ist und sich aufgrund seiner teilweisen elastischen Verformbarkeit verformen und umlaufende Wellenverformungen und/oder Wellendurchbiegungen ausgleichen zu vermag. Der zweite Bereich kann ebenfalls elastisch verformbar sein.

Vorzugsweise ist dabei der erste Bereich des inneren Lagerteils als elastisch verformbarer Hohlzylinder ausgebildet.

Ferner kann der innere Lagerteil wenigstens die Lagerfläche zur Wirkverbindung mit dem äußeren Lagerteil aufweist.

Die wenigstens eine Lagerfläche des inneren Lagerteils kann wenigstens teilweise mit Gleitlagermaterial beschichtet und/oder wenigstens teilweise aus einem solchen Material aufgebaut sein.

Des weiteren kann die wenigstens eine Lagerfläche des inneren Lagerteils im Wesentlichen konzentrisch zu der Rotationsachse angeordnet sein und/oder im Wesentlichen senkrecht zu der Rotationsachse angeordnet sein. Im ersten Fall kann die wenigstens eine Lagerfläche des inneren Lagerteils an einer zu der Rotationsachse konzentrischen Außenumfangsfläche ausgebildet sein. Im zweiten Fall kann die wenigstens eine Lagerfläche des inneren Lagerteils an einem sich im Wesentlichen senkrecht zu der Rotationsachse erstreckenden Bereich ausgebildet sein, wobei es ferner möglich ist, dass der sich im Wesentlichen senkrecht zu der Rotationsachse erstreckende Bereich des inneren Lagerteils zur Wirkverbindung mit einem an der Welle ausgebildeten Absatz ausgelegt ist.

Der äußere Lagerteil kann (ebenfalls) eine Lagerfläche zur Wirkverbindung mit der Welle aufweisen, die vorzugsweise wenigstens teilweise mit Gleitlagermaterial beschichtet und/oder wenigstens teilweise aus einem solchen Material aufgebaut ist.

Die wenigstens eine Lagerfläche des äußeren Lagerteils kann im Wesentlichen konzentrisch zu der Rotationsachse angeordnet sein und/oder im Wesentlichen senkrecht zu der Rotationsachse angeordnet sein. Im ersten Fall kann die wenigstens eine Lagerfläche des äußeren Lagerteils an einer zu der Rotationsachse konzentrischen Innenumfangsfläche ausgebildet sein. Im zweiten Fall kann die wenigstens eine Lagerfläche des äußeren Lagerteils an einem sich im Wesentlichen senkrecht zu der Rotationsachse erstreckenden Bereich ausgebildet sein, wobei es ferner möglich ist, dass der sich im Wesentlichen senkrecht zu der Rotationsachse erstreckende Bereich des äußeren Lagerteils zur Wirkverbindung mit dem sich im Wesentlichen senkrecht zu der Rotationsachse erstreckende Bereich des inneren Lagerteils ausgelegt ist.

Bei bevorzugten Ausführungsformen umfasst der äußere Lagerteil einen Bereich, der sowohl die Lagerfläche zur Wirkverbindung mit dem inneren Lagerteil als auch eine Befestigungsfläche aufweist, die zur Befestigung des äußeren Lagerteils an einer Befestigungsstruktur ausgelegt ist. Als Befestigungsstruktur kann beispielsweise ein Gehäuse für die Lageranordnung dienen. Bei solchen Ausführungsformen kann die elastische Verformbarkeit des äußeren Lagerteils z.B. durch Verwendung eines elastisch komprimierbaren Materials erreicht werden.

Bei weiteren bevorzugten Ausführungsformen umfasst der äußere Lagerteil einen ersten Bereich zur Wirkverbindung mit dem inneren Lagerteil und einen mit dem ersten Bereich gekoppelten elastisch verformbaren zweiten Bereich. Dabei ist es vorgesehen, dass der zweite Bereich den inneren Lagerteil nicht unmittelbar kontaktiert, sondern mit diesem mittelbar über den ersten Bereich gekoppelt ist. Diese Trennung ermöglicht es, dass der zweite Bereich aufgrund seiner elastischen Verformbarkeit umlaufende Wellenverformungen und/oder Wellendurchbiegungen auszugleichen vermag. Ergänzend kann der erste Bereich wenigstens teilweise elastisch komprimierbar ausgebildet sein, um für einen weiteren, zusätzlichen Ausgleich zu sorgen.

Dabei ist es insbesondere bevorzugt, dass der zweite Bereich des äußeren Lagerteils einen elastisch verformbaren Flansch umfasst. Der elastische Flansch kann einen hohlzylinderförmigen Bereich umfassen, der mit dem zweiten Bereich verbunden ist und im Wesentlichen konzentrisch zu der Rotationsachse ausgeführt sein kann. Der Flansch kann (ergänzend oder alternativ) einen sich wenigstens teilweise in einer zur Rotationsachse senkrechten Ebene erstreckenden Bereich aufweisen.

Des weiteren kann der äußere Lagerteil einen dritten Bereich umfassen, der zur Befestigung des äußeren Lagerteils an einer Befestigungsstruktur (z.B. ein Gehäuse für die Lageranordnung) ausgelegt ist. Der dritte Bereich ist vorzugsweise mit dem zweiten Bereich (z.B. Flansch) verbunden und kann einen hohlzylinderförmigen Bereich umfassen, der im Wesentlichen konzentrisch zu der Rotationsachse ausgeführt sein kann.

Außerdem kann der äußere Lagerteil einen vierten Bereich umfassen, der zur Wirkverbindung mit einem Bereich des Endes der Welle ausgelegt ist.

Die vorliegende Erfindung stellt ferner eine Anordnung bereit, die eine Welle mit einem Ende und eine erfindungsgemäße Lageranordnung umfasst, wobei das Ende der Welle und der innere Lagerteil verdrehsicher miteinander gekoppelt sind.

Vorzugsweise weist das Ende der Welle wenigstens eine Schmierbohrung auf, über die beispielsweise eine oder mehrere lastfreie Zonen des inneren Lagerteils mit Schmiermittel versorgt werden können.

Der weiteren sieht die vorliegende Erfindung einen Schwingungserreger vor, der die obige erfindungsgemäße Anordnung umfasst, wobei wenigstens eine mittels der Welle drehbare Unwuchtmasse vorhanden sein kann.

### Kurze Beschreibung der Zeichnungen

Im Folgenden sind bevorzugte Ausführungsformen der vorliegenden Erfindung unter Bezugnahme auf die beigefügten Zeichnungen beschrieben, die zeigen:
- Fig. 1: eine schematische Schnittdarstellung einer Ausführungsform der vorliegenden Erfindung mit elastisch verformbarem inneren Lagerteil; und
- Fig. 2: eine schematische Schnittdarstellung einer Ausführungsform der vorliegenden Erfindung mit elastisch verformbarem äußeren Lagerteil.

### Beschreibung bevorzugter Ausführungsformen

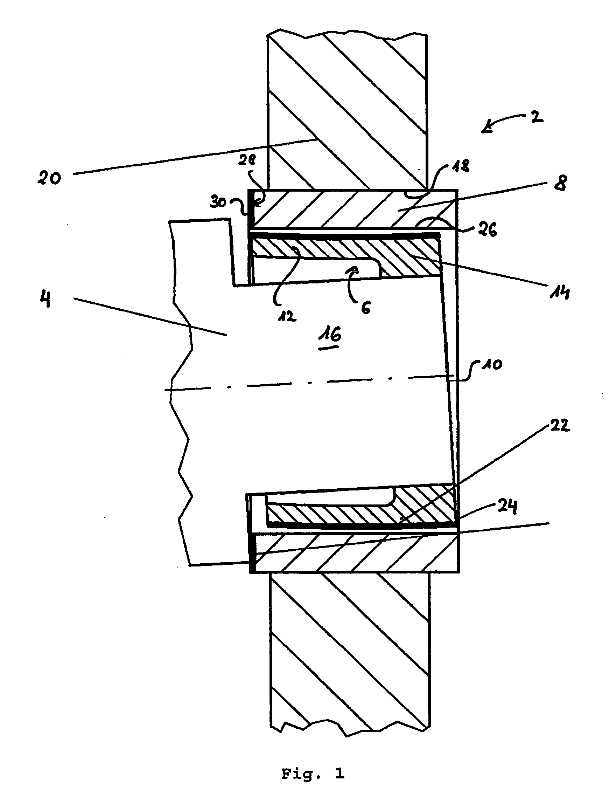

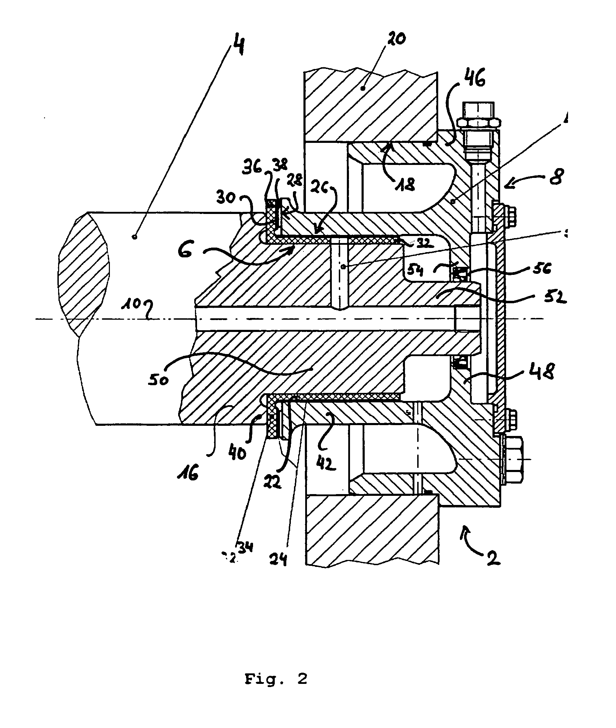

Fig. 1 und 2 zeigen bevorzugte Ausführungsformen der vorliegenden Erfindung, die beispielsweise bei einem Schwingungserreger oder Vibrator verwendet werden oder ein Bestandteil davon sein können. Ein Bespiel für einen Schwingungserreger oder Vibrator ist z.B. in WO 2005/075749 A1 beschrieben. Im Folgenden ist zur Veranschaulichung auf eine Anwendung der vorliegenden Erfindung bei einem Schwingungserreger Bezug genommen; wie bereits oben ausgeführt beschränken sich Anwendungen der vorliegenden Erfindung aber nicht auf derartige Vorrichtungen, sondern sind überall dort vorgesehen, wo umlaufende Wellenverformungen und/oder Wellendurchbiegungen ausgeglichen werden sollen.

Schwingungserreger und Vibratoren erzeugen mittels einer oder mehreren an einer oder mehreren Wellen angeordneten Unwuchtmassen Schwingungen und/oder Vibrationen, die beispielsweise auf Rammgut (z.B. Spundbohlen, Träger etc.) übertragen werden, das in Erdreich eingebracht werden soll.

Dabei treten durch Drehung der Unwuchtmasse(n) Kräfte und insbesondere Fliehkräfte auf, die auf die Lager der Welle(n) wirken. Ferner sind die Lager hohen Drehzahlen unterworfen. Da die Drehzahleignung von Lagern und insbesondere Wälzlagern mit steigender Tragzahl abnimmt, sind die Belastungsgrenzen handlesüblicher Lager (z.B. Wälzlager) einschränkend. Die Verwendung von Gleitlagern, wie z.B. in WO 2005/075749 A1 beschrieben, stellt gegenüber Wälzlagern eine Verbesserung dar.

Wie eingangs ausgeführt, verformt (verbiegt) sich beim Betrieb die Welle eines Schwingungserregers aufgrund von durch die Drehung einer oder mehreren Unwuchtmassen entstehenden Kräfte. Die Verformung/Durchbiegung der Welle kann bewirken, dass sich die gelagerten Wellenenden in ihren Lagern verkanten und in den Lagern (z.B. Gleitlagern) Kantenpressung auftritt. Dies ist insbesondere bei zunehmender Drehzahl und/oder größerer Unwuchtmasse möglich, weil sich dann auch die Verformung bzw. Durchbiegung vergrößert. Die Gefahr einer Kantenpressung im Lager erhöht sich, wenn - wie allgemein üblich - zur Vermeidung von (hoher) Lagerreibleistung größere Lagerbreiten verwendet werden.

Ein Verkanten der Wellenenden in ihren Lagern könnte theoretisch begrenzt werden, indem das Lagerspiel vergrößert und/oder kleinere Lagerbreiten verwendet werden. Allerdings hat ein größeres Lagerspiel zur Folge, dass eine erhöhte Flächenpressung im Lager auftreten kann und zu einem Fressen des Lagers führen kann. Eine schmales Lager ist mit einem größeren Durchmesser auszuführen, um maximal zulässige Flächenpressung im Lager nicht zu überschreiten, was u.a. auch zu einem größeren Lagerspiel mit den genannten Nachteilen führt. Derartige Ansätze sind daher unzureichend.

Erfindungsgemäß wird diese Problematik gelöst, indem bei drehbaren Wellen auftretende umlaufende Wellenverformungen und/oder Wellendurchbiegungen dadurch ausgeglichen werden, dass eine zur Lagerung eines Wellenendes vorgesehene Lageranordnung teilweise elastisch so verformbar ist, dass ein Verkanten des Wellenendes in der Lageranordnung vermieden oder wenigstens auf eine tolerierbares Maß verringert wird.

In Fig. 1 ist eine Ausführungsform einer erfindungsgemäßen Lagerordnung 2 gezeigt, die zur Lagerung einer Welle 4 vorgesehen ist.

Die Lageranordnung 2 umfasst einen inneren Lagerteil 6 und einen äußeren Lagerteil 8 und weist eine Rotationsachse 10 auf.

Der innere Lagerteil 6 ist als Lagerhülse für eine Gleitlagerung ausgebildet und weist einen ersten Bereich 12 und einen zweiten Bereich 14 auf. Der erste Bereich 12 ist als "freigestellter" Hohlzylinder mit einem Innendurchmesser ausgebildet, der einen Kontakt mit der Welle 4 verhindert. Der zweite Bereich 14 ist ebenfalls als Hohlzylinder ausgebildet, allerdings mit einem Innendurchmesser, der kleiner als der des ersten Bereichs 12 und so bemessen ist, dass sich eine verdrehsichere Verbindung dem Ende 16 der Welle 4 herstellen lässt (z.B. durch Presssitz).

Der äußere Lagerteil 8 ist als Lagerbuchse für eine Gleitlagerung ausgebildet und weist an seinem Außenumfang eine Befestigungsfläche 18 auf. Mittels der Befestigungsfläche 18 kann der äußere Lagerteil 8 an einer Befestigungsstruktur 20, beispielsweise einem Teil eines Gehäuses für die Wellen-Lager-Anordnung, befestigt werden. Bei derartigen Ausführungsformen kann auf eine elastische Verformbarkeit des äußeren Lagerteils 8 gegebenenfalls verzichtet werden. Alternativ kann ein äußerer Lagerteil verwendet werden, der elastisch komprimierbar ist oder mit dem äußeren Lagerteil vergleichbar ist, der unter Bezugnahme auf Fig. 2 erläutert ist.

An seinem äußeren Umfang weist der innere Lagerteil 6 eine Lagerfläche 22 zur Wirkverbindung mit dem äußeren Lagerteil 8 auf. Die Lagerfläche 22 kann wenigstens teilweise mit einer reibungsreduzierenden Beschichtung oder Gleitlagermaterial 24 beschichtet und/oder wenigstens teilweise aus einem solchen Material aufgebaut sein.

Darstellungsgemäß ist die Lagerfläche 22 des inneren Lagerteils 6 als zylindrische Mantelfläche konzentrisch zu der Rotationsachse 10 ausgebildet.

Erfindungsgemäß weist der äußere Lagerteil 8 (auch) eine Lagerfläche 26 auf, die zur Wirkverbindung mit dem inneren Lagerteil 6 vorgesehen ist. Die Lagerfläche 26 kann ebenfalls wenigstens teilweise mit einer reibungsreduzierenden Beschichtung oder Gleitlagermaterial (nicht gezeigt) beschichtet und/oder wenigstens teilweise aus einem solchen Material aufgebaut sein.

Darstellungsgemäß ist die Lagerfläche 26 des äußeren Lagerteils 8 als zylindrische Mantelfläche konzentrisch zu der Rotationsachse 10 ausgebildet.

Des weiteren kann es vorteilhaft sein, wenn der äußere Lagerteil 8 eine weitere Lagerfläche 28 hat. Diese ist bei der gezeigten Ausführungsform als im Wesentlichen senkrecht zu der Rotationsachse verlaufende Stirnfläche ausgebildet, die zu der Welle 4 weist. Die weitere Lagerfläche 28 ist vorzugsweise auch wenigstens teilweise mit einer reibungsreduzierenden Beschichtung oder Gleitlagermaterial 30 ausgestattet und/oder wenigstens teilweise aus einem solchen Material aufgebaut. Dadurch kann man Beschädigungen von Welle 4 und/oder äußerem Lagerteil 8 vermeiden oder wenigstens reduzieren, wenn - wie in Fig. 1 unten angedeutet - Wellendurchbiegungen auftreten, bei denen die Welle 4 den äußeren Lagerteil 8 kontaktiert.

Die Funktionsweise von unter Bezugnahme auf Fig. 1 beschriebenen Ausführungsformen ist wie folgt:
Treten bei Drehung der Welle 4 umlaufende Wellenverformungen und/oder Wellendurchbiegungen und in Folge davon umlaufende Schrägstellungen des Wellenendes auf, kann sich der als "freigestellter" Hohlzylinder ausgebildete erste Bereich 12 elastisch verformen. Dadurch werden umlaufende Schrägstellungen des Wellenendes umlaufend ausgeglichen, d.h. die in Fig. 1 veranschaulichte Verformung des ersten Bereichs 12 läuft mit der Wellendrehzahl zusammen mit der sich drehenden Welle 4 um.

In Fig. 2 ist eine weitere Ausführungsform einer erfindungsgemäßen Lagerordnung 2 gezeigt, die zur Lagerung einer Welle 4 vorgesehen ist. Die Lageranordnung 2 umfasst wiederum einen inneren Lagerteil 6 und einen äußeren Lagerteil 8.

Auch hier ist der innere Lagerteil 6 als Lagerhülse für eine Gleitlagerung ausgebildet. Der innere Lagerteil 6 hat einen hohlzylindrischen Bereich 32, der verdrehsicher mit der Welle 4 beispielsweise mittels Presssitz, Verkleben oder dergleichen, verbunden ist. Bei solchen Ausführungsformen kann auf eine elastische Verformbarkeit des inneren Lagerteils 6, insbesondere in seinem Bereich 32, gegebenenfalls verzichtet werden. Alternativ kann ein innerer Lagerteil verwendet werden, der insbesondere im Bereich 32 elastisch komprimierbar ist oder der mit dem inneren Lagerteil vergleichbar ist, der unter Bezugnahme auf Fig. 1 erläutert ist.

An seinem äußeren Umfang des Bereichs 32 weist der innere Lagerteil 6 eine Lagerfläche 22 zur Wirkverbindung mit dem äußeren Lagerteil auf. Die Lagerfläche 22 kann wenigstens teilweise mit einer reibungsreduzierenden Beschichtung oder Gleitlagermaterial 24 beschichtet und/oder wenigstens teilweise aus einem solchen Material aufgebaut sein.

Darstellungsgemäß ist die Lagerfläche 24 als zylindrische Mantelfläche konzentrisch zu der Rotationsachse 10 ausgebildet.

Ferner weist der innere Lagerteil 6 einen sich von dem Bereich 32 im Wesentlichen senkrecht weg erstreckenden Bereich 34 auf, der sich auch senkrecht zu der Rotationsachse 10 erstreckt. Der flanschartige Bereich 34 ist an seiner dem äußeren Lagerteil 8 zugewandten als Lagerfläche dienenden Stirnseite 36 wenigstens teilweise mit einer reibungsreduzierenden Beschichtung oder Gleitlagermaterial 38 ausgestattet und/oder wenigstens teilweise aus einem solchen Material aufgebaut. An seiner der Welle 4 zugewandten Stirnseite ist der Bereich 34 ausgelegt, um sich an einem Absatz 40 an der Welle 4 abzustützen.

Der Bereich 34 sorgt einerseits für eine bessere Verbindung mit der Welle 4 und andererseits für eine weitere Gleitlagerung mit dem äußeren Lagerteil 8.

Der äußere Lagerteil 8 weist einen ersten Bereich 42 auf, der zur Wirkverbindung mit dem inneren Lagerteil 6 und insbesondere dessen Bereich 32 ausgelegt ist. Der erste Bereich 42 ist hohlzylindrisch und umfasst an seiner Innenseite eine Lagerfläche 26, die zur Wirkverbindung mit dem inneren Lagerteil 6 vorgesehen ist. Die Lagerfläche 26 kann wenigstens teilweise mit einer reibungsreduzierenden Beschichtung oder Gleitlagermaterial (nicht gezeigt) beschichtet und/oder wenigstens teilweise aus einem solchen Material aufgebaut sein

Darstellungsgemäß ist die Lagerfläche 26 des äußeren Lagerteils 8 als zylindrische Mantelfläche konzentrisch zu der Rotationsachse 10 ausgebildet.

Des weiteren hat der äußere Lagerteil 8 eine weitere Lagerfläche 28. Diese ist bei der gezeigten Ausführungsform als im Wesentlichen senkrecht zu der Rotationsachse verlaufende Stirnfläche ausgebildet, die zu der Lagerfläche 36 des inneren Lagerteils 6 weist. Die weitere Lagerfläche 28 ist vorzugsweise auch wenigstens teilweise mit einer reibungsreduzierenden Beschichtung oder Gleitlagermaterial 30 ausgestattet und/oder wenigstens teilweise aus einem solchen Material aufgebaut. Die Lagerfläche 28 kann wie in Fig. 1 ausgebildet sein oder, wie in Fig. 2 veranschaulicht, an einem verdickten Ende des äußeren Lagerteils 8 angeordnet sein, das einen größeren Außendurchmesser als der Bereich 42 hat.

Der äußere Lagerteil 8 hat ferner einen zweiten Bereich 44, der sich darstellungsgemäß rechts an den ersten Bereich 42 anschließt. Der zweite Bereich 44 ist elastisch verformbar und beispielsweise flanschartig ausgebildet.

Ein dritter Bereich 46 des äußeren Lagerteils 8 dient zur Befestigung an einer Befestigungsstruktur 20, beispielsweise einem Teil eines Gehäuses für die Wellen-Lager-Anordnung, und weist hierfür eine Befestigungsfläche 18 auf.

Ein vierter Bereich 48 des äußeren Lagerteils 8 erstreckt sich als ringförmige Struktur im Wesentlichen senkrecht zu der Rotationsachse 10 und ist zur Wirkverbindung mit Welle 4 ausgelegt. Die Welle 4 kann, wie in Fig. 2 veranschaulicht (bezüglich ihres Querschnitts in Längsrichtung) am Ende gestuft sein, um den Absatz 40 zu bilden, der eine Querschnittsverringerung zu einem ersten Wellenendbereich 50 bereitstellt. Der erste Wellenendbereich 50 ist zur Wirkverbindung mit dem Bereich 32 des inneren Lagerteils 6 vorgesehen. Ferner kann die Welle einen zweiten Wellenendbereich 52 mit noch weiter reduziertem Durchmesser haben. Der zweite Wellenendbereich 52 ist zur Wirkverbindung mit dem vierten Bereich 48 des äußeren Lagerteils 8 vorgesehen. Zur Reibungsverringerung und/oder Lagerung des zweiten Wellenendbereichs 52 und des vierten Bereichs 48 kann letzterer an seinem radial innenliegenden Ende 54 ein Lager 56 (z.B. Wälz- oder Gleitlager) aufweisen. Alternativ kann ein Lager statt am vierten Bereich 48 am zweiten Wellenendbereich 52 angeordnet sein. Ferner ist es möglich, dass die Welle 4 den zweiten Wellenendbereich 52 nicht aufweist und der erste Wellenendbereich 50 sich in Richtung Wellenende über den inneren Lagerteil 6 hinaus erstreckt und zur Wirkverbindung mit dem vierten Bereich 48 des äußeren Lagerteils 8 vorgesehen ist.

Über eine oder mehrere in der Welle 4 ausgebildete Schmierbohrungen 58 kann den Lagerflächen der inneren und äußeren Lagerteile 6 und 8 Schmiermittel (z.B. Öl) zugeführt werden.

Die Funktionsweise von unter Bezugnahme auf Fig. 2 beschriebenen Ausführungsformen ist wie folgt:
Treten bei Drehung der Welle 4 umlaufende Wellenverformungen und/oder Wellendurchbiegungen und in Folge davon umlaufende Schrägstellungen des Wellenendes auf, kann sich der flanschartig ausgebildete zweite Bereich 44 elastisch verformen. Dadurch werden umlaufende Schrägstellungen des Wellenendes umlaufend ausgeglichen, d.h. eine Verformung des zweiten Bereichs 44 läuft mit der Drehzahl der Welle zusammen mit der sich drehenden Welle um.

Bei Ausführungsformen, bei denen der innere und/oder der äußere Lagerteil 6 bzw. 8 wenigstens teilweise elastisch komprimierbares Material umfasst, werden umlaufende Schrägstellungen des Wellenendes aufgrund von umlaufenden Wellenverformungen und/oder Wellendurchbiegungen der Welle 4 bei deren Drehung durch entsprechende Komprimierung des inneren und/oder äußeren Lagerteils 6 bzw. 8 ausgeglichen. Dabei erfolgt der Ausgleich ebenfalls umlaufend, d.h. die Komprimierung läuft mit der Drehzahl der Welle zusammen mit der sich drehenden Welle um. -

## Patentansprüche

1. Lageranordnung für eine drehbare Welle (4) mit
- einem inneren Lagerteil (6) zur Kopplung mit einem Ende (16) der Welle (4);
- einem äußeren Lagerteil (8) zur Kopplung mit einer Befestigungsstruktur (20); und
- einer Rotationsachse;
- wobei wenigstens einer des inneren Lagerteils (6) und des äußeren Lagerteils (8) wenigstens bereichsweise eine elastische Verformbarkeit wenigstens teilweise senkrecht zur Rotationsachse (10) aufweist,
**dadurch gekennzeichnet, dass**
- sich die Gleitfläche der Lageranordnung zwischen dem inneren Lagerteil (6) und dem äußeren Lagerteil (8) befindet.

2. Lageranordnung nach Anspruch 1, bei der
- der innere Lagerteil (6) eine Lagerhülse für das Gleitlager umfasst, und/oder
- der äußere Lagerteil (8) eine Lagerbuchse für das Gleitlager umfasst; und/oder
- der innere Lagerteil (6) einen Bereich (14, 32) aufweist, der zur verdrehsicheren Wirkverbindung und insbesondere zur formschlüssigen Aufnahme des Endes (16) der Welle (4) ausgelegt ist; und/oder
- wenigstens einer des inneren Lagerteils (6) und des äußeren Lagerteils (8) wenigstens teilweise elastisch komprimierbar ist; und/oder
- der innere Lagerteil (6) einen ersten Bereich (12) mit einem ersten Innendurchmesser und einen zweiten Bereich (14) mit einem zweiten Innendurchmesser umfasst, wobei der erste Innendurchmesser größer als der zweite Innendurchmesser ist, wobei vorzugsweise der erste Bereich (12) des inneren Lagerteils (6) als elastisch verformbarer Hohlzylinder ausgebildet ist.

3. Lageranordnung nach einem der vorherigen Ansprüche, bei der der innere Lagerteil (6) wenigstens die Lagerfläche (22, 36) zur Wirkverbindung mit dem äußeren Lagerteil (8) aufweist, wobei vorzugsweise die wenigstens eine Lagerfläche (22, 36) des inneren Lagerteils (6) wenigstens teilweise mit Gleitlagermaterial (24, 38) beschichtet und/oder wenigstens teilweise aus einem solchen Material aufgebaut ist.

4. Lageranordnung nach Anspruch 3, bei der die wenigstens eine Lagerfläche (22, 36) des inneren Lagerteils (6) im Wesentlichen konzentrisch zu der Rotationsachse (10) angeordnet ist, wobei vorzugsweise die wenigstens eine Lagerfläche (22, 36) des inneren Lagerteils (6) an einer zu der Rotationsachse (10) konzentrischen Außenumfangsfläche ausgebildet ist.

5. Lageranordnung nach einem der Ansprüche 3 oder 4, bei der die wenigstens eine Lagerfläche (22, 36) des inneren Lagerteils (6) im Wesentlichen senkrecht zu der Rotationsachse (10) angeordnet ist, wobei vorzugsweise die wenigstens eine Lagerfläche (22, 36) des inneren Lagerteils (6) an einem sich im Wesentlichen senkrecht zu der Rotationsachse (10) erstreckenden Bereich (34) ausgebildet ist, wobei vorzugsweise der der sich im Wesentlichen senkrecht zu der Rotationsachse (10) erstreckende Bereich (34) des inneren Lagerteils (6) zur Wirkverbindung mit einem an der Welle (4) ausgebildeten Absatz (40) ausgelegt ist.

6. Lageranordnung nach einem der vorherigen Ansprüche, bei der der äußere Lagerteil (8) eine Lagerfläche (28) zur Wirkverbindung mit der Welle (4) aufweist.

7. Lageranordnung nach Anspruch 5, bei der
- die wenigstens eine Lagerfläche (26, 28) des äußeren Lagerteils (8) wenigstens teilweise mit einem Gleitlagermaterial beschichtet und/oder wenigstens teilweise aus einem solchen Material aufgebaut ist; und/oder
- die wenigstens eine Lagerfläche (26, 28) des äußeren Lagerteils (8) im Wesentlichen konzentrisch zu der Rotationsachse (10) angeordnet ist, wobei vorzugsweise die wenigstens eine Lagerfläche (26, 28) des äußeren Lagerteils (8) an einer zu der Rotationsachse (10) konzentrischen Innenumfangsfläche ausgebildet ist.

8. Lageranordnung nach Anspruch 6 oder 7, bei der die wenigstens eine Lagerfläche (26, 28) des äußeren Lagerteils (8) im Wesentlichen senkrecht zu der Rotationsachse (10) angeordnet ist.

9. Lageranordnung nach Anspruch 8, bei der die wenigstens eine Lagerfläche (26, 28) des äußeren Lagerteils (8) an einem sich im Wesentlichen senkrecht zu der Rotationsachse (10) erstreckenden Bereich ausgebildet ist, der, wenn der innere Lagerteil (6) einen sich im Wesentlichen senkrecht zu der Rotationsachse (10) erstreckenden Bereich aufweist, zur Wirkverbindung mit diesem ausgelegt ist.

10. Lageranordnung nach einem der Ansprüche 1 bis 9, bei der der äußere Lagerteil (8) einen Bereich umfasst, der die Lagerfläche zur Wirkverbindung mit dem inneren Lagerteil (6) und eine Befestigungsfläche aufweist, die zur Befestigung des äußeren Lagerteils (8) an einer Befestigungsstruktur (20) ausgelegt ist; und/oder
- der äußere Lagerteil (8) einen ersten Bereich (42) zur Wirkverbindung mit dem inneren Lagerteil (6) und einen mit dem ersten Bereich gekoppelten elastisch verformbaren zweiten Bereich (44) umfasst, wobei vorzugsweise der zweite Bereich (44) des äußeren Lagerteils (8) einen elastisch verformbaren Flansch umfasst und/oder der äußere Lagerteil (8) einen dritten Bereich (45) umfasst, der zur Befestigung des äußeren Lagerteils (8) an einer Befestigungsstruktur (20) ausgelegt ist und/oder der äußere Lagerteil (8) einen vierten Bereich (48) umfasst, der zur Wirkverbindung mit einem Bereich (52; 50) des Endes (16) der Welle (4) ausgelegt ist.

11. Anordnung mit
- einer Welle (4) mit einem Ende; und
- einer Lageranordnung gemäß einem der Ansprüche 1 bis 10;
- wobei das Ende der Welle (4) und der innere Lagerteil (6) verdrehsicher miteinander gekoppelt sind.

12. Anordnung nach Anspruch 11, bei der das Ende der Welle (4) wenigstens eine Schmierbohrung (58) aufweist.

13. Schwingungserreger mit der Anordnung nach Anspruch 11 oder 12.

14. Schwingungserreger nach Anspruch 13 mit wenigstens einer mittels der Welle (4) drehbaren Unwuchtmasse.

## Claims

1. Bearing arrangement for a rotating shaft (4) with
- an inner part (6) of the bearing for coupling to one end (16) of the shaft (4);
- an outer part (8) of the bearing for coupling to a fixing structure (20); and
- a rotation axis;
- where at least either the inner part (6) of the bearing or the outer part (8) of the bearing possesses, at least in certain areas, an elastic deformability at least part of which is at right angles to the rotation axis (10),
**characterised in that**
- the sliding surface of the bearing arrangement is located between the inner part (6) of the bearing and the outer part (8) of the bearing.

2. Bearing arrangement according to claim 1 where
- the inner part (6) of the bearing includes a bearing sleeve for sliding bearings, and/or
- the outer part (8) of the bearing includes a bearing sleeve for sliding bearings, and/or
- the inner part (6) of the bearing has an area (14, 32) which is designed for the twist-proof operative connection and in particular the positive fitting of the end (16) of the shaft (4), and/or
- either the inner part (6) of the bearing or the outer part (8) of the bearing is at least partially elastically compressible, and/or
- the inner part (6) of the bearing includes a first area (12) with a first inner diameter and a second area (14) with a second inner diameter, where the first inner diameter is greater than the second inner diameter, where preferably the first area (12) of the inner part (6) of the bearing is formed as an elastically deformable hollow cylinder.

3. Bearing arrangement according to one of the above claims, where the inner part (6) of the bearing has at least the bearing surface (22, 36) for operative connection with the outer part (8) of the bearing, where preferably the minimum of one bearing surface (22, 36) of the inner part (6) of the bearing is at least partially coated with sliding-bearing material (24, 38) and/or is constructed at least partially of such a material.

4. Bearing arrangement according to claim 3 where the minimum of one bearing surface (22, 36) of the inner part (6) of the bearing is arranged essentially concentrically to the rotation axis (10), where preferably the minimum of one bearing surface (22, 36) of the inner part (6) of the bearing is formed on an outer circumferential surface which is concentric to the rotation axis (10).

5. Bearing arrangement according to either of the claims 3 or 4 where the minimum of one bearing surface (22, 36) of the inner part (6) of the bearing is arranged essentially vertically to the rotation axis (10), where preferably the minimum of one bearing surface (22, 36) of the inner part (6) of the bearing is formed on an area (34) extending essentially vertically to the rotation axis (10), where preferably the area (34) of the inner part (6) of the bearing extending essentially vertically to the rotation axis (10) is designed for operative connection with a shoulder (40) formed on the shaft (4).

6. Bearing arrangement according to any of the above claims, where the outer part (8) of the bearing has a bearing surface (28) for operative connection to the shaft (4).

7. Bearing arrangement according to claim 5 where
- the minimum of one bearing surface (26, 28) of the outer part (8) of the bearing is at least partially coated with sliding-bearing material and/or is constructed at least partially of such a material; and/or
- the minimum of one bearing surface (26, 28) of the outer part (8) of the bearing is arranged essentially concentrically to the rotation axis (10), where preferably the minimum of one bearing surface (26, 28) of the outer part (8) of the bearing is formed on an inner circumferential surface concentric to the rotation axis (10).

8. Bearing arrangement according to claim 6 or claim 7 where the minimum of one bearing surface (26, 28) of the outer part (8) of the bearing is arranged essentially vertically to the rotation axis (10).

9. Bearing arrangement according to claim 8 where the minimum of one bearing surface (26, 28) of the outer part (8) of the bearing is formed on an area extending essentially vertically to the rotation axis (10), which, when the inner part (6) of the bearing has an area extending essentially vertically to the rotation axis (10), is designed for operative connection to this.

10. Bearing arrangement according to any of the claims 1 - 9 where the outer part (8) of the bearing includes an area which has the bearing surface for operative connection to the inner part (6) of the bearing and a fixing surface which is designed for the attachment of the outer part (8) of the bearing to a fixing structure (20); and/or
- the outer part (8) of the bearing includes a first area (42) for operative connection to the inner part (6) of the bearing and an elastically deformable second area (44) coupled to the first area, where preferably the second area (44) of the outer part (8) of the bearing includes an elastically deformable flange and/or the outer part (8) of the bearing includes a third area (45) which is designed for the attachment of the outer part (8) of the bearing to a fixing structure (20), and/or the outer part (8) of the bearing includes a fourth area (48) which is designed for operative connection to an area (52, 50) of the end (16) of the shaft (4).

11. Arrangement with
- a shaft (4) with an end, and
- a bearing arrangement according to any of the claims 1 - 10;
- where the end of the shaft (4) and the inner part (6) of the bearing are coupled to one another in such a way as to preclude twisting.

12. Arrangement according to claim 11 where the end of the shaft (4) has at least one lubrication bore (58).

13. Vibration exciter with the arrangement according to claim 11 or claim 12.

14. Vibration exciter according to claim 13 with at least one imbalance mass rotatable by means of the shaft (4).

## Revendications

1. Compensation d'une position d'arbre oblique périphérique (4), comprenant
- une pièce de palier intérieure (6) pour former un accouplement avec une extrémité (16) de l'arbre (4) ;
- une pièce de palier extérieure (8) pour former un accouplement avec une structure de fixation (20) ; et
- un axe de rotation ;
- sachant que, de la pièce de palier intérieure (6) et de la pièce de palier extérieure (8), au moins l'une présente au moins localement une déformabilité élastique au moins en partie perpendiculairement à l'axe de rotation (10),
**caractérisée en ce que**
- la surface de glissement de la compensation d'une position d'arbre oblique périphérique se trouve entre la pièce de palier intérieure (6) et la pièce de palier extérieure (8).

2. Compensation d'une position d'arbre oblique périphérique selon la revendication 1, dans laquelle
- la pièce de palier intérieure (6) comprend une douille pour le palier lisse, et/ou
- la pièce de palier extérieure (8) comprend une douille pour le palier lisse ; et/ou
- la pièce de palier intérieure (6) présente une zone (14, 32) conçue pour établir une jonction active anti-torsion et en particulier pour recevoir par adhérence de formes l'extrémité (16) de l'arbre (4) ; et/ou
- de la pièce de palier intérieure (6) et de la pièce de palier extérieure (8), au moins l'une est au moins en partie compressible élastiquement ; et/ou
- la pièce de palier intérieure (6) comprend une première zone (12) avec un premier diamètre intérieur et une deuxième zone (14) avec un deuxième diamètre intérieur, sachant que le premier diamètre intérieur est plus important que le deuxième diamètre intérieur, sachant que de préférence la première zone (12) de la pièce de palier intérieure (6) est configurée sous forme de cylindre creux élastiquement déformable.

3. Compensation d'une position d'arbre oblique périphérique selon l'une des revendications précédentes, dans laquelle la pièce de palier intérieure (6) présente au moins la surface de palier (22, 36) pour établir une jonction efficace avec la pièce de palier extérieure (8), sachant que de préférence au moins une surface (22, 36) de la pièce de palier intérieure (6) est revêtue au moins en partie d'un matériau (24, 38) officiant de palier lisse et/ou est au moins au moins constituée en partie d'un tel matériau.

4. Compensation d'une position d'arbre oblique périphérique selon la revendication 3, dans laquelle au moins une surface de palier (22, 36) de la pièce de palier intérieure (6) est agencée pour l'essentiel en concentricité avec l'axe de rotation (10), sachant que de préférence au moins une surface (22, 36) de la pièce de palier intérieure (6) est configurée contre une surface de la circonférence extérieure en concentricité avec l'axe (10) de rotation.

5. Compensation d'une position d'arbre oblique périphérique selon l'une des revendications 3 ou 4, dans laquelle au moins une surface de palier (22, 36) de la pièce de palier intérieure (6) est agencée pour l'essentiel perpendiculairement à l'axe de rotation (10), sachant que de préférence au moins une surface d'appui (22, 36) de la pièce de palier intérieure (6) est configurée contre une zone (34) s'étendant pour l'essentiel perpendiculairement à l'axe de rotation (10), sachant que de préférence la zone (34) de la pièce de palier intérieure (6), zone s'étendant pour l'essentiel perpendiculairement à l'axe de rotation (10), est conçue avec un talon (40) configuré contre l'arbre (4) dans le but d'établir une jonction active.

6. Compensation d'une position d'arbre oblique périphérique selon l'une des revendications précédentes, dans laquelle la pièce de palier extérieure (8) présente une surface d'appui (28) pour établir la jonction active avec l'arbre (4).

7. Compensation d'une position d'arbre oblique périphérique selon la revendication 5, dans laquelle
- au moins une surface palier (26, 28) de la pièce de palier extérieure (8) est revêtue au moins en partie d'un matériau officiant de palier lisse et/ou est fabriquée au moins en partie à l'aide d'un tel matériau ; et/ou
- au moins une surface palier (26, 28) de la pièce de palier extérieure (8) est agencée pour l'essentiel en concentricité avec l'axe de rotation (10), sachant que de préférence au moins une surface de palier (26, 28) de la pièce de palier extérieure (8) est configurée contre une surface circonférentielle intérieure en concentricité avec l'axe de rotation (10).

8. Compensation d'une position d'arbre oblique périphérique selon la revendication 6 ou 7, dans laquelle au moins une surface de palier (26, 28) de la pièce de palier extérieure (8) est agencée pour l'essentiel verticalement par rapport à l'axe de rotation (10).

9. Compensation d'une position d'arbre oblique périphérique selon la revendication 8, dans laquelle au moins une surface de palier (26, 28) de la pièce de palier extérieure (8) est configurée contre une zone s'étendant pour l'essentiel perpendiculairement à l'axe de rotation (10), zone qui, lorsque la pièce de palier intérieure (6) présente une zone s'étendant pour l'essentiel perpendiculairement à l'axe de rotation (10), est conçue pour établir une jonction active avec cette zone.

10. Compensation d'une position d'arbre oblique périphérique selon l'une des revendications 1 à 9, dans laquelle la pièce de palier extérieure (8) comprend une zone qui comprend la surface de palier servant à établir la jonction active avec la pièce de palier intérieure (6) et une surface de fixation conçue pour fixer la pièce de palier extérieure (8) contre une structure de fixation (20) ; et/ou dans laquelle
- la pièce de palier extérieure (8) comprend une première zone (42) pour établir une jonction active avec la pièce de palier intérieure (6) et une deuxième zone (44) élastiquement déformable couplée avec la première zone, sachant que de préférence la deuxième zone (44) de la pièce de palier extérieure (8) comprend un flasque élastiquement déformable et/ou la pièce de palier extérieure (8) comprend une troisième zone (45) conçue pour fixer la pièce de palier extérieure (8) contre une structure de fixation (20), et/ou que la pièce de palier extérieure (8) comprend une quatrième zone (48) conçue pour établir une jonction active avec une zone (52 ; 50) de l'extrémité (16) de l'arbre (4).

11. Compensation d'une position d'arbre oblique périphérique comprenant
- un arbre (4) avec une extrémité ; et
- une compensation de position d'arbre oblique périphérique selon l'une des revendications 1 à 10 ;
- sachant que l'extrémité de l'arbre (4) et la pièce de palier intérieure (6) sont couplées entre elles de façon à empêcher la torsion.

12. Compensation d'une position d'arbre oblique périphérique selon la revendication 11, dans laquelle l'extrémité de l'arbre (4) comporte au moins un alésage de lubrification (58).

13. Générateur de vibrations avec compensation d'une position d'arbre oblique périphérique selon la revendication 11 ou 12.

14. Générateur de vibrations selon la revendication 13, comportant au moins une masse déséquilibrée tournant au moyen d'un arbre (4).
